# FASCICULE DE BREVET EUROPEEN

(11) **EP 1 719 888 B1**
(45) Date de publication et mention de la délivrance du brevet: **15.07.2015**
(21) Numéro de dépôt: 06290657.3
(22) Date de dépôt: 21.04.2006
(51) Int. Cl.: F02C 7/00, F02C 7/22, F01D 25/28, F01D 9/06

(54) **Dispositif d'alimentation en carburant d'une chambre de combustion dans une turbomachine**
Kraftstoffzuführeinrichtung einer Brennkammer in einer Turbomaschine
Fuel supplying device of a combustion chamber in a turbomachine

(30) Priorité: 26.04.2005 FR 0504153
(43) Date de publication de la demande: 08.11.2006
(73) Titulaire: SNECMA, 75015 Paris (FR)
(72) Inventeur: Duverneuil, Katia, 77210 Avon (FR); Lhuillery, Gilles Gérard, 91100 Corbeil-Essonnes (FR); Stephan, Marc, 77000 Melun (FR)
(74) Mandataire: Ramey, Daniel

(56) Documents cités:
- US-A- 4 907 743
- US-A- 5 273 249
- US-A1- 2002 069 647

## Description

La présente invention concerne un dispositif d'alimentation en carburant d'une chambre de combustion dans une turbomachine, telle qu'un turboréacteur ou un turbopropulseur d'avion.

Dans ce dispositif, une rampe annulaire d'amenée de carburant s'étend autour d'un carter cylindrique externe de la chambre de combustion et est reliée d'une part à des moyens d'alimentation en carburant, et d'autre part à une pluralité d'injecteurs qui sont fixés sur ce carter et qui débouchent dans la chambre de combustion.

Ces injecteurs sont raccordés à la rampe d'amenée de carburant par des conduits coudés de transport de carburant et par des moyens mécaniques de support de la rampe qui ont pour fonction d'autoriser une dilatation thermique radiale du carter par rapport à la rampe annulaire, tout en supportant la rampe annulaire et les conduits coudés de façon suffisamment rigide, la rampe annulaire restant relativement froide tandis que le carter de la chambre de combustion est porté à une température relativement élevée en fonctionnement.

Une solution doit donc être trouvée, qui assure la flexibilité des moyens de support de la rampe, afin d'absorber la dilatation thermique radiale du carter par rapport à la rampe annulaire, et qui présente une certaine rigidité pour supporter de façon satisfaisante la rampe annulaire et les conduits coudés précités de raccordement aux injecteurs.

Le document US-A-5 273 249 décrit des moyens de support d'une rampe de carburant dans une turbomachine, ces moyens de support comportant deux pattes maintenues serrées l'une contre l'autre par des moyens de fixation comprenant une rondelle Belleville.

L'invention a notamment pour but de répondre au besoin précité de manière efficace, simple et économique.

Elle propose à cet effet un dispositif d'alimentation en carburant d'une chambre de combustion dans une turbomachine, telle qu'un turboréacteur ou un turbopropulseur d'avion, comprenant une rampe annulaire d'amenée de carburant s'étendant autour d'un carter cylindrique externe de la chambre de combustion et reliée à des moyens d'alimentation en carburant, et une pluralité d'injecteurs fixés sur le carter et débouchant dans la chambre de combustion, ces injecteurs étant reliés à la rampe d'amenée de carburant par des conduits coudés de transport de carburant et par des moyens de support de la rampe, caractérisé en ce que les moyens de support de la rampe comprennent des moyens déformables en flexion, torsion et pivotement autorisant une dilatation thermique radiale du carter par rapport à la rampe annulaire et assurant un support rigide de la rampe annulaire.

Ces moyens de support déformables en flexion, torsion et pivotement du dispositif selon l'invention autorisent une dilatation thermique radiale relativement importante du carter par rapport à la rampe annulaire, tout en maintenant rigidement la rampe annulaire et en évitant ses déformations et sa mise en résonance pendant le fonctionnement du moteur.

Dans un premier mode de réalisation de l'invention, les moyens déformables sont reliés à la rampe annulaire et aux injecteurs par des pattes rigides qui s'étendent dans un même plan à distance l'une de l'autre, et comprennent au moins un et de préférence deux ressorts à lames ou à spires montés entre les pattes rigides, ces ressorts étant déformables en flexion, torsion et pivotement et autorisant la libre dilatation thermique du carter par rapport à la rampe.

Dans un second mode de réalisation de l'invention, les moyens déformables sont reliés à la rampe annulaire et aux injecteurs par des pattes rigides qui s'étendent dans des plans parallèles, et qui peuvent être en appui l'une contre l'autre ou à distance l'une de l'autre.

Dans le cas où les pattes parallèles sont en appui l'une contre l'autre, elles sont réunies par des rivets montés avec un jeu radial dans des orifices desdites pattes rigides et dont les têtes forment des moyens de retenue axiale des pattes rigides avec un jeu axial. Les jeux des rivets permettent des déplacements relatifs faibles entre les pattes rigides et autorisent ainsi une dilatation thermique radiale du carter sans mise en contrainte de la rampe, qui est par ailleurs supportée directement par le carter au moyen de pattes coudées déformables.

Dans le cas où les pattes rigides sont parallèles et à distance l'une de l'autre, les moyens de support précités comprennent au moins un ressort de compression qui s'étend perpendiculairement entre les pattes rigides et qui est maintenu entre celles-ci par une vis coaxiale dont une extrémité comprend une tête en forme de calotte sphérique guidée sur un siège correspondant porté par l'une des pattes rigides, afin de former une liaison rotulante et ainsi favoriser la déformation en flexion, torsion, et pivotement des moyens de support.

Dans une variante de réalisation, les moyens de support comprennent un câble métallique enroulé élastiquement entre les pattes rigides, autour d'un axe parallèle à celles-ci, et guidé dans des passages de barrettes fixées auxdites pattes, les extrémités du câble métallique étant maintenues dans des orifices de ces barrettes.

Dans une autre variante, les moyens de support comprennent un coussin métallique monté entre les extrémités des pattes rigides, et une tige de maintien s'étendant à l'intérieur du coussin, perpendiculairement aux pattes rigides, et montée dans des orifices de ces pattes.

Dans encore une autre variante, un ressort de compression s'étend autour du coussin métallique, coaxialement à celui-ci, et prend appui à ses extrémités sur les pattes rigides.

Dans une autre variante, les moyens de support comprennent une butée lamifiée, formée d'un empilement de lames ou rondelles coniques métalliques ou de rondelles d'élastomère, cette butée étant montée entre les extrémités des pattes, perpendiculairement à celles-ci, et fixée à ces extrémités par des vis.

Les moyens de support selon l'invention ont une structure simple et ont une bonne tenue thermique aux températures élevées. Ils peuvent être montés entre la rampe annulaire et certains au moins des injecteurs de carburant. Ils sont, dans certaines réalisations, constitués pour partie de moyens déformables disponibles dans le commerce.

D'autres caractéristiques, détails et avantages de l'invention apparaîtront à la lecture de la description suivante faite à titre d'exemple non limitatif en référence aux dessins annexés dans lesquels :
- la figure 1 est une vue schématique en perspective d'un dispositif selon l'invention d'alimentation en carburant d'une chambre de combustion dans une turbomachine ;
- la figure 2 est une vue schématique partielle en coupe axiale, à plus grande échelle, d'un mode de réalisation du dispositif selon l'invention, représentant des moyens de support de la rampe annulaire d'amenée de carburant ;
- les figures 3 à 10 sont des vues correspondant à la figure 2 et illustrent des variantes de réalisation du dispositif selon l'invention.

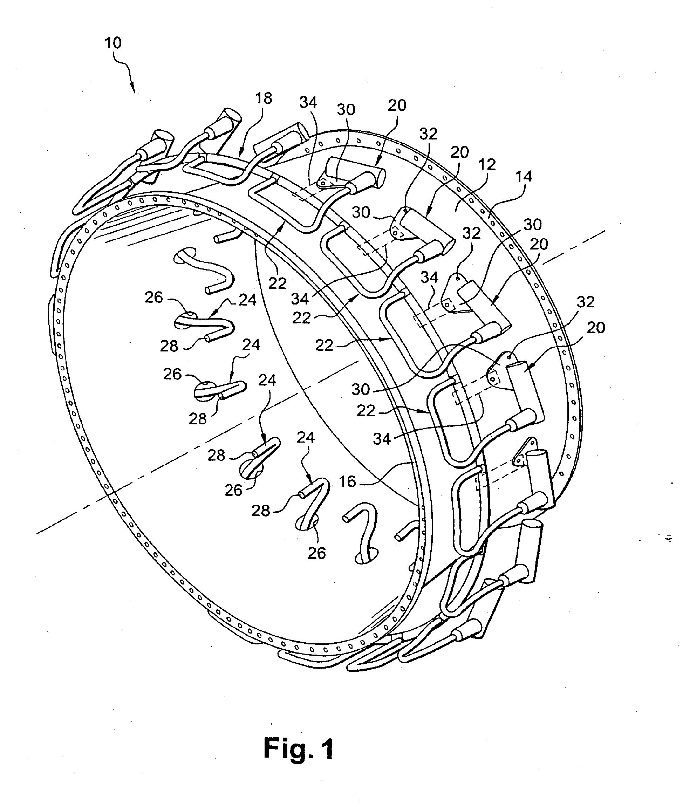

On a représenté en figure 1 un dispositif 10 d'alimentation en carburant d'une chambre annulaire de combustion d'une turbomachine, qui est porté par un carter cylindrique externe 12 de la chambre de combustion, ce carter 12 comportant à son extrémité amont une bride annulaire 14 de fixation sur un carter correspondant d'un compresseur de la turbomachine, et à son extrémité aval une bride annulaire 16 de fixation sur un carter correspondant d'une turbine de la turbomachine.

Le dispositif 10 comprend une rampe annulaire 18 d'amenée de carburant qui s'étend autour du carter 12, à distance de celui-ci, et qui est reliée à des moyens (non représentés) d'alimentation en carburant, et une pluralité d'injecteurs 20 qui sont fixés sur le carter 12 et qui sont raccordés à la rampe 18 par des conduits 22 de transport de carburant qui sont coudés en L ou en U et qui sont reliés à la rampe 18 perpendiculairement à celle-ci par une extrémité, leur autre extrémité étant reliée à un injecteur 20.

Chaque injecteur 20 comprend un conduit 24 qui s'étend radialement à l'intérieur du carter 12 à travers un orifice 26 de celui-ci et qui comporte une extrémité radialement interne 28 orientée vers l'aval dans la chambre de combustion. L'injecteur 20 est fixé sur le carter au moyen d'une collerette 30 qui obture l'orifice et qui est fixée au carter par des vis 32.

Des moyens 34 de support relient la rampe 18 à au moins certains des injecteurs 20, ces moyens 34 étant schématiquement représentés par des traits en pointillés en figure 1.

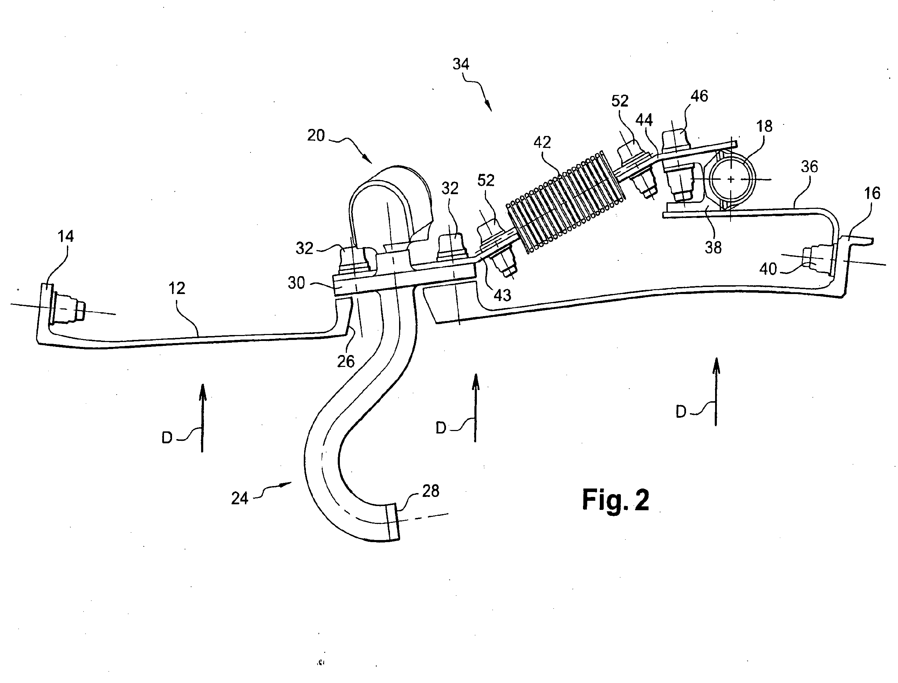

Un premier mode de réalisation de ces moyens de support est représenté en figure 2, où l'on voit que la rampe 18 est également reliée au carter 12 par au moins une patte 36 coudée en L dont une extrémité est fixée à un collier 38 monté autour de la rampe 18, et dont l'autre extrémité est fixée à la bride annulaire 16 du carter par au moins une vis 40.

Chaque patte 36 est déformable et autorise la dilatation thermique radiale du carter 12 par rapport à la rampe 18. Ces pattes 36 sont régulièrement réparties sur la périphérie de la rampe 18.

Les moyens de support 34 de la figure 2 comprennent deux ressorts de traction 42 dont les extrémités sont fixées sur des pattes rigides 43, 44 portées par l'injecteur 20 et par la rampe 18, respectivement.

La patte rigide 43 est appliquée sur la collerette 30 de l'injecteur et fixée avec celle-ci sur le carter au moyen des vis 32 précitées, et la patte rigide 44 est fixée par au moins une vis 46 sur le collier 38 précité monté autour de la rampe et relié à la patte coudée 36. Ces pattes 43, 44 ont des extrémités qui s'étendent l'une vers l'autre dans un même plan.

Les ressorts 42 sont des ressorts de traction à spires qui s'étendent en parallèle l'un à côté de l'autre dans un plan perpendiculaire au plan du dessin et incliné d'amont en aval vers l'extérieur, d'environ 20° par rapport à l'axe du carter 12, un des ressorts 42 étant situé dans le plan du dessin.

Les ressorts 42 sont accrochés à leurs extrémités sur des vis 52 fixées sur les extrémités précitées des pattes rigides 43, 44.

En fonctionnement de la turbomachine, les injecteurs 20 et le carter 12 peuvent atteindre des températures de l'ordre de 450°C alors que la rampe de carburant est à une température de l'ordre de 120°C.

Cette différence de température se traduit par une dilatation thermique radiale du carter 12 dans la direction indiquée par les flèches D, par rapport à la rampe 18.

Les ressorts 42 sont déformables en étirement, flexion, torsion, et pivotement et autorisent cette dilatation thermique du carter 12 par rapport à la rampe annulaire 18.

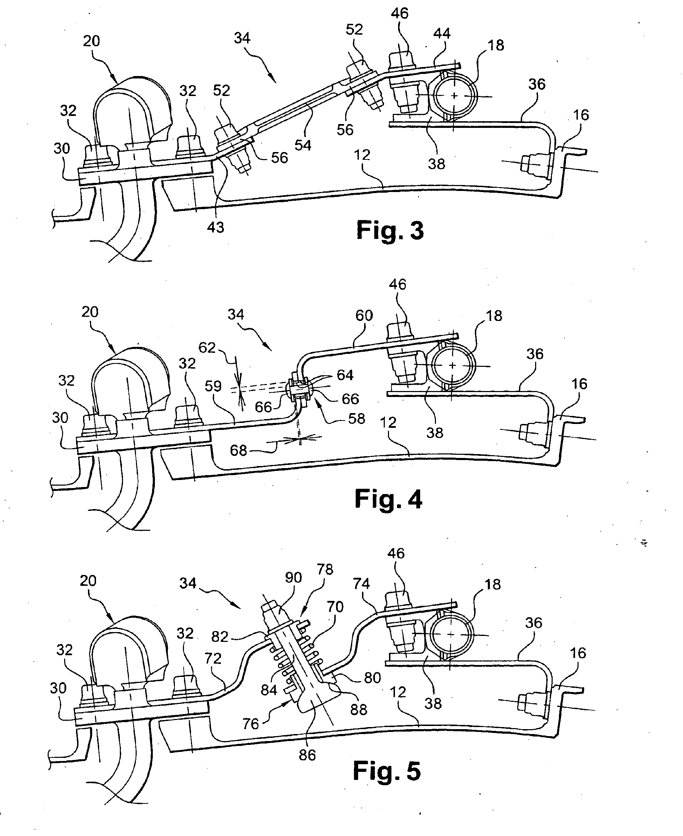

Dans la variante de réalisation de l'invention représentée en figure 3, les moyens de support 34 comprennent au moins deux lames ou tiges métalliques 54 élastiquement déformables dont les extrémités sont fixées par des vis 52 sur les pattes rigides 43, 44 précitées portées par l'injecteur 20 et la rampe 18, respectivement.

Les lames ou tiges métalliques 54 sont allongées et s'étendent sensiblement parallèlement l'une à côté de l'autre comme les ressorts 42 précités, une des lames 54 étant située dans le plan du dessin.

Ces lames 54 sont solidaires à leurs extrémités de deux barres transversales 56 qui s'étendent perpendiculairement au plan des dessins, et qui sont fixées sur les extrémités précitées des pattes rigides 43, 44 par les vis 52 précitées.

En fonctionnement de la turbomachine et pendant la dilatation thermique radiale du carter 12, les lames 54 se déforment en flexion, torsion et pivotement pour limiter la mise en contrainte de la rampe 18.

Dans la variante de réalisation de l'invention représentée en figure 4, les moyens de support 34 comprennent des rivets 58 qui sont montés dans des orifices de pattes rigides 59, 60 fixées sur l'injecteur 20 et la rampe 18, respectivement.

Les pattes rigides 59, 60 s'étendent l'une vers l'autre, sensiblement parallèlement l'une à l'autre et à l'axe du carter 12, et ont des extrémités en regard qui sont coudées à angle droit et appliquées l'une contre l'autre.

L'extrémité coudée de la patte rigide 59 portée par l'injecteur 20 est orientée sensiblement radialement vers l'extérieur, et l'extrémité coudée de la patte rigide 60 portée par la rampe 18 est orientée sensiblement radialement vers l'intérieur.

Au moins deux rivets 58 sont montés avec un jeu radial 62 dans des orifices 64 de ces extrémités des pattes et s'étendent l'un à côté de l'autre dans un plan perpendiculaire au plan du dessin, un des rivets 56 étant situé dans le plan du dessin.

Les têtes 66 des rivets sont situées à faible distance des extrémités des pattes rigides 59, 60 et forment des moyens de retenue axiale de celles-ci avec un jeu axial 68.

Le jeu axial 68 et le jeu radial 62 des rivets sont déterminés pour permettre des déplacements relatifs faibles entre les pattes rigides 59, 60 et autoriser la dilatation thermique radiale du carter 12 par rapport à la rampe annulaire 18, qui comme dans les autres modes de réalisation est portée également par les pattes 36 fixées sur la bride aval du carter 12.

Dans la variante de réalisation de l'invention représentée en figure 5, les moyens de support 34 comprennent un ressort de compression 70 qui s'étend perpendiculairement entre des pattes rigides 72, 74 fixées sur l'injecteur 20 et la rampe 18, respectivement.

Les pattes rigides 72, 74 s'étendent l'une vers l'autre et ont des extrémités en regard qui sont parallèles et à distance l'une de l'autre, et se recouvrent mutuellement.

L'extrémité de la patte 72 portée par l'injecteur 20 est inclinée vers l'aval et vers l'extérieur, d'environ 20° par rapport à l'axe du carter 12, et l'extrémité de la patte 74 portée par la rampe 18 est parallèle à l'extrémité de la patte 72 et située radialement à l'intérieur de celle-ci.

Le ressort 70 est un ressort de compression à spires dont les extrémités sont en appui sur les faces en regard des extrémités des pattes 72, 74 et engagées sur des douilles 76, 78 montées dans des orifices des extrémités des pattes.

Chaque douille 76, 78 comporte un rebord annulaire externe 80, 82, respectivement, d'appui sur une face d'une patte, située du côté opposé au ressort 70.

Une vis 84 s'étend à l'intérieur des douilles 80, 82 et du ressort 70, coaxialement à ceux-ci, et comprend à une extrémité une tête 86 en forme de calotte sphérique qui est guidée sur un siège 88 correspondant formé dans le rebord externe 80 de la douille 76 pour former une liaison rotulante.

L'autre extrémité de la vis reçoit un écrou 90 prenant appui sur le rebord externe 82 de la douille 78.

La liaison rotulante autorise les déformations en flexion, torsion et pivotement des moyens 34.

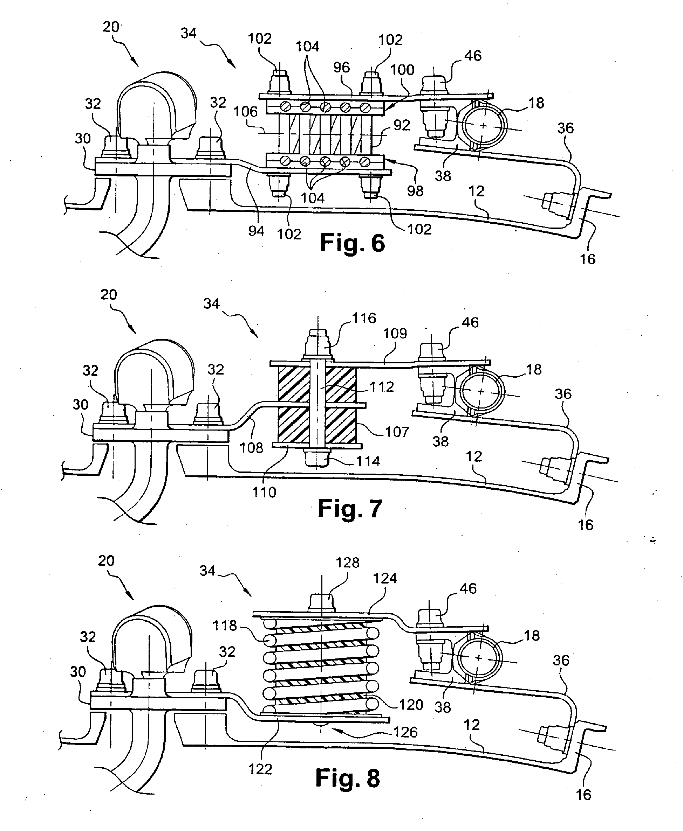

Dans la variante de réalisation de l'invention représentée en figure 6, les moyens de support 34 comprennent un câble métallique 92 qui est enroulé ou bobiné entre des pattes rigides 94, 96 fixées sur l'injecteur 20 et sur la rampe 18, respectivement.

Les pattes 94, 96 s'étendent l'une vers l'autre et sont sensiblement parallèles l'une à l'autre et à l'axe du carter 12. Elles ont des extrémités en regard qui sont parallèles et à distance l'une de l'autre, et se recouvrent mutuellement.

La patte 96 reliée à la rampe annulaire 18 est située radialement à l'extérieur de la patte 94 reliée à l'injecteur 20.

Des barrettes 98, 100 sont fixées sur les extrémités en regard des pattes 94, 96 au moyen de vis 102.

Ces barrettes sont en deux parties appliquées l'une sur l'autre et comportant sur leurs faces en regard des rainures transversales 104 formant des passages recevant le câble métallique 92.

Le câble 92 est enroulé élastiquement entre les pattes rigides 94, 96, autour d'un axe 106 parallèle à celles-ci, et passe dans les rainures 104 des barrettes 98, 100, ses extrémités étant maintenues et fixées dans les rainures d'extrémité des barrettes.

L'ensemble formé par les pattes 94, 96, les barrettes 98, 100 et le câble métallique 92 enroulé est élastiquement déformable en flexion, torsion, et pivotement et autorise la dilatation thermique radiale du carter 12 par rapport à la rampe 18.

Dans la variante de réalisation représentée en figure 7, les moyens de support 34 comprennent un coussin métallique 107 qui est monté entre des pattes rigides 108, 109 fixées sur l'injecteur 20 et sur la rampe 18, respectivement.

Les pattes 108, 109 sont du même type que celles décrites en référence à la figure 6.

Le coussin métallique 107 s'étend sensiblement radialement entre une plaque de maintien 110 appliquée sur son extrémité radialement interne, et l'extrémité de la patte rigide 109 sur laquelle est appliquée son extrémité radialement externe.

Le coussin 107 est réalisée en deux parties mises bout à bout et l'extrémité de la patte rigide 108 s'étend entre la plaque 110 et la patte 109, parallèlement à celles-ci, et est engagée entre les deux parties du coussin métallique 107, sensiblement en son milieu.

Une tige 112 s'étend axialement à l'intérieur du coussin 107, perpendiculairement aux pattes rigides et à la plaque de maintien 110, et passe dans des orifices de celles-ci.

La tige 112 comprend à une extrémité une tête 114 en appui sur la plaque 110, du côté opposé au coussin, et son autre extrémité est filetée et reçoit un écrou 116 qui s'appuie sur la patte rigide 109, du côté opposé au coussin.

L'ensemble formé par les pattes 108, 109, la plaque 110 et le coussin métallique 107 est déformable en flexion, torsion, et pivotement et autorise la dilatation thermique radiale du carter 12 par rapport à la rampe 18. Le coussin 107 est par exemple réalisé en fils métalliques tressés.

Dans la variante de réalisation de l'invention représentée en figure 8, les moyens de support 34 comprennent un ressort de compression 118 entourant un coussin métallique 120 similaire au coussin 107 précité, et monté entre des pattes rigides 122, 124 fixées sur l'injecteur 20 et la rampe 18, respectivement.

Les pattes 122, 124 sont semblables à celles décrites en référence à la figure 6.

Le coussin métallique 120 s'étend sensiblement radialement entre les pattes rigides 122 et 124.

Le ressort 118 est un ressort de compression à spires, qui est coaxial au coussin 120 et s'appuie à ses extrémités sur les extrémités des pattes rigides 122, 124.

Une tige 126 s'étend coaxialement à l'intérieur du coussin et du ressort, perpendiculairement aux pattes rigides 122, 124, et comprend une tête 128 en appui sur la patte rigide 124, du côté opposé au coussin, son extrémité opposée étant par exemple filetée et recevant un écrou prenant appui sur la patte rigide 122, du côté opposé au coussin.

L'ensemble formé par les pattes rigides 122, 124, et le coussin métallique 120 et le ressort 118 associé est déformable en flexion, torsion, et pivotement et autorise la dilatation thermique radiale du carter 12 par rapport à la rampe 18.

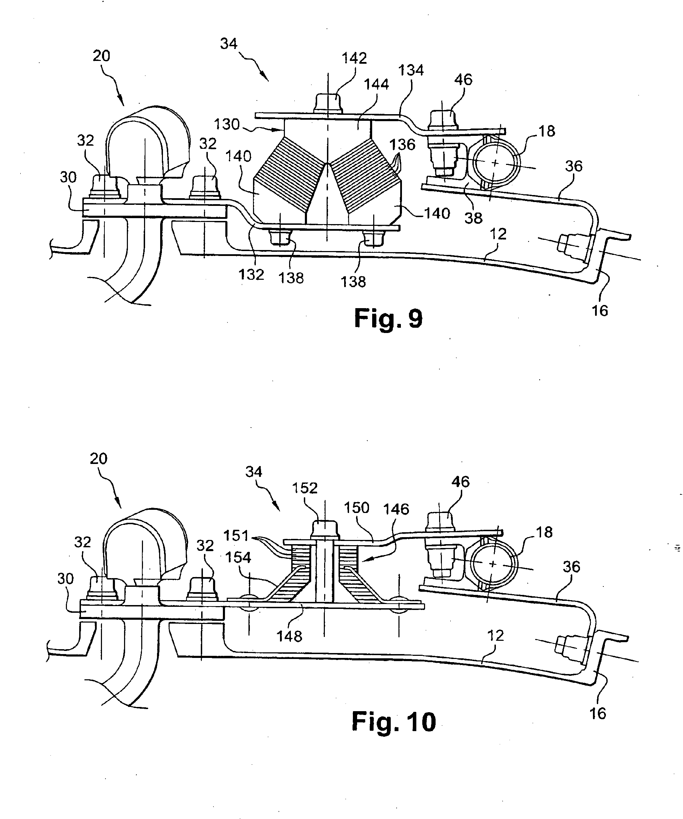

Dans la variante de réalisation de l'invention représentée en figure 9, les moyens de support 34 comprennent une butée lamifiée conique 130 qui est montée entre des pattes rigides 132, 134 fixées sur l'injecteur 20 et la rampe 18, respectivement.

Les pattes 132, 134 sont semblables à celles de la figure 6.

La butée 130 est formée d'un empilement de lames ou rondelles coniques métalliques 136, et s'étend sensiblement radialement entre les pattes rigides 132 et 134.

La butée 130 est fixée sur la patte rigide intérieure 132 au moyen de vis 138 engagées dans deux jambes obliques 140 de support des lames 136, et elle est fixée au moyen d'au moins une vis 142 sur la patte rigide extérieure 134, la vis 142 étant vissée dans une jambe centrale 144 de support des lames 136.

Cette butée 130 est disponible dans le commerce.

Dans la variante de réalisation de l'invention représentée en figure 10, les moyens de support 34 comprennent une butée lamifiée 146 montée entre des pattes rigides 148, 150 fixées sur l'injecteur 20 et la rampe 18, respectivement.

La butée 146, qui est d'un type connu disponible dans le commerce, comprend un empilement de rondelles d'élastomère 151, fixé par une vis centrale 152 sur la patte extérieure 150 et par une rondelle tronconique 154 sur la patte intérieure 148.

Les deux butées des figures 9 et 10 offrent les mêmes avantages que les modes de réalisation des figures précédentes.

## Revendications

1. Dispositif d'alimentation en carburant d'une chambre de combustion dans une turbomachine, telle qu'un turboréacteur ou un turbopropulseur d'avion, comprenant une rampe annulaire (18) d'amenée de carburant s'étendant autour d'un carter cylindrique externe (12) de la chambre de combustion et reliée à des moyens d'alimentation en carburant, et une pluralité d'injecteurs (20) fixés sur le carter (12) et débouchant dans la chambre de combustion, ces injecteurs (20) étant reliés à la rampe (18) d'amenée de carburant par des conduits coudés (22) de transport de carburant et par des moyens (34) de support de la rampe (18), **caractérisé en ce que** les moyens de support (34) de la rampe comprennent des moyens déformables en flexion, torsion et pivotement autorisant une dilatation thermique radiale du carter par rapport à la rampe annulaire (18) et assurant un support rigide de la rampe annulaire (18).

2. Dispositif selon la revendication 1, **caractérisé en ce que** les moyens déformables sont reliés à la rampe annulaire (18) et aux injecteurs (20) par des pattes rigides s'étendant dans un même plan.

3. Dispositif selon la revendication 2, **caractérisé en ce que** les moyens déformables comprennent au moins un ressort de traction (42) monté entre les pattes rigides (43, 44) qui sont alignées l'une avec l'autre et distantes l'une de l'autre.

4. Dispositif selon la revendication 3, **caractérisé en ce que** les moyens déformables comprennent deux ressorts de traction (42) montés en parallèle l'un à coté de l'autre entre lesdites pattes rigides (43, 44).

5. Dispositif selon la revendication 2, **caractérisé en ce que** les moyens déformables comprennent deux lames ou tiges métalliques (54) élastiquement déformables montées en parallèle entre les pattes rigides (43, 44) qui sont alignées l'une avec l'autre et distantes l'une de l'autre.

6. Dispositif selon la revendication 1, **caractérisé en ce que** les moyens déformables sont reliés à la rampe annulaire (18) et aux injecteurs (20) par des pattes rigides s'étendant dans des plans parallèles.

7. Dispositif selon la revendication 6, **caractérisé en ce que** les extrémités des pattes rigides (59, 60) sont appliquées l'une sur l'autre et réunies par des rivets (58) qui sont montés avec un jeu radial (62) dans des orifices (64) des pattes rigides (59, 60) et dont les têtes (66) forment des moyens de retenue axiale des pattes rigides (59, 60) avec un jeu axial (68).

8. Dispositif selon la revendication 6, **caractérisé en ce que** les moyens déformables comprennent au moins un ressort de compression (70) s'étendant perpendiculairement entre les pattes rigides (72, 74) et maintenu entre celles-ci par une vis (84) coaxiale.

9. Dispositif selon la revendication 8, **caractérisé en ce que** la vis (84) comprend une tête (86) en forme de calotte sphérique guidée sur un siège (88) correspondant porté par l'une des pattes rigides (74).

10. Dispositif selon la revendication 6, **caractérisé en ce que** les moyens déformables comprennent un câble métallique (92) enroulé élastiquement entre les pattes rigides (94, 96), autour d'un axe (106) parallèle à celles-ci, et guidé dans des passages de barrettes (98, 100) fixées aux pattes (94, 96).

11. Dispositif selon la revendication 6, **caractérisé en ce que** les moyens déformables comprennent un coussin métallique (107, 120) monté entre les extrémités des pattes rigides (108, 109, 122, 124), et une tige de maintien (112, 126) s'étendant à l'intérieur du coussin (107, 120), perpendiculairement aux pattes rigides (108, 109, 122, 124), et montée dans des orifices de ces pattes.

12. Dispositif selon la revendication 6, **caractérisé en ce que** les moyens déformables comprennent un coussin métallique (120) s'étendant entre les pattes rigides (122, 124), un ressort de compression (118) s'étendant autour du coussin métallique (120), coaxialement à celui-ci, et appuyé à ses extrémités sur les pattes rigides (122, 124), et une tige (126) s'étendant axialement à l'intérieur du coussin (120) et du ressort (118) et retenue à ses extrémités sur les pattes rigides (122, 124).

13. Dispositif selon la revendication 6, **caractérisé en ce que** les moyens déformables comprennent une butée lamifiée (130, 146) formée d'un empilement de lames ou rondelles coniques (136) métalliques ou de rondelles d'élastomère (151), cette butée étant montée entre les extrémités des pattes (132, 134, 148, 150), perpendiculairement à celles-ci, et fixée à ces extrémités par des vis (138, 142, 152).

## Patentansprüche

1. Vorrichtung zur Kraftstoffversorgung einer Brennkammer in einer Turbomaschine bzw. einem Turbotriebwerk, wie etwa in einem Turbostrahltriebwerk oder Turbopropellertriebwerk für Flugzeuge, enthaltend eine ringförmige Zuführrampe (18) zum Zuführen von Kraftstoff, die sich um ein zylindrisches Außengehäuse (12) der Brennkammer herum erstreckt und mit Mitteln zur Versorgung mit Kraftstoff verbunden ist, sowie eine Mehrzahl von Injektoren (20), die an das Gehäuse (12) befestigt sind und in die Brennkammer münden, wobei diese Injektoren (20) mit der Kraftstoffzuführrampe (18) über gekrümmte Förderleitungen (22) zum Fördern von Kraftstoff und über Haltemittel (34) zum Halten der Rampe (18) verbunden sind, **dadurch gekennzeichnet, dass** die Haltemittel (34) zum Halten der Rampe unter Biegung, Torsion und Schwenkung verformbare Mittel aufweisen, welche eine radiale Wärmeausdehnung des Gehäuses gegenüber der ringförmigen Rampe (18) gestatten und einen starren Halt der ringförmigen Rampe (18) gewährleisten.

2. Vorrichtung nach Anspruch 1, **dadurch gekennzeichnet, dass** die verformbaren Mittel über starre Laschen, die sich in einer gleichen Ebene erstrecken, mit der ringförmigen Rampe (18) und mit den Injektoren (20) verbunden sind.

3. Vorrichtung nach Anspruch 2, **dadurch gekennzeichnet, dass** die verformbaren Mittel zumindest eine Zugfeder (42) aufweisen, die zwischen den starren Laschen (43, 44) montiert ist, die miteinander fluchten und voneinander beabstandet sind.

4. Vorrichtung nach Anspruch 3, **dadurch gekennzeichnet, dass** die verformbaren Mittel zwei Zugfedern (42) aufweisen, die zwischen den starren Laschen (43, 44) parallel nebeneinanderliegend montiert sind.

5. Vorrichtung nach Anspruch 2, **dadurch gekennzeichnet, dass** die verformbaren Mittel zwei elastisch verformbare Metallstege bzw. - stäbe (54) aufweisen, die zwischen den starren Laschen (43, 44) parallel montiert sind, die miteinander fluchten und voneinander beabstandet sind.

6. Vorrichtung nach Anspruch 1, **dadurch gekennzeichnet, dass** die verformbaren Mittel mit der ringförmigen Rampe (18) und den Injektoren (20) über starre Laschen verbunden sind, die sich in parallelen Ebenen erstrecken.

7. Vorrichtung nach Anspruch 6, **dadurch gekennzeichnet, dass** die Enden der starren Laschen (59, 60) aneinandergedrückt sind und über Nieten (58) vereint sind, die mit radialem Spiel (62) in Öffnungen (64) der starren Laschen (59, 60) montiert sind und deren Köpfe (66) Festhaltemittel zum axialen Festhalten der starren Laschen (59, 60) mit axialem Spiel (68) bilden.

8. Vorrichtung nach Anspruch 6, **dadurch gekennzeichnet, dass** die verformbaren Mittel zumindest eine Druckfeder (70) aufweisen, die sich senkrecht zwischen den starren Laschen (72, 74) erstreckt und zwischen diesen über eine koaxial verlaufende Schraube (84) gehalten wird.

9. Vorrichtung nach Anspruch 8, **dadurch gekennzeichnet, dass** die Schraube (84) einen Kopf (86) in Form einer sphärischen Kalotte aufweist, der an einem entsprechenden Sitz (88) geführt wird, welcher von einer der starren Laschen (74) getragen wird.

10. Vorrichtung nach Anspruch 6, **dadurch gekennzeichnet, dass** die verformbaren Mittel ein Drahtseil (92) aufweisen, das elastisch zwischen den starren Laschen (94, 96) um eine Achse (106) herum parallel zu diesen gewickelt und in Durchlässen von Leisten (98, 100) geführt ist, die an die Laschen (94, 96) befestigt sind.

11. Vorrichtung nach Anspruch 6, **dadurch gekennzeichnet, dass** die verformbaren Mittel ein Drahtpolster (107, 120) aufweisen, das zwischen den Enden der starren Laschen (108, 109, 122, 124) montiert ist, sowie einen Haltestab (112, 126), der sich innerhalb des Polsters (107, 120) senkrecht zu den starren Laschen (108, 109, 122, 124) erstreckt und in Öffnungen dieser Laschen montiert ist.

12. Vorrichtung nach Anspruch 6, **dadurch gekennzeichnet, dass** die verformbaren Mittel ein Drahtpolster (120) aufweisen, das sich zwischen den starren Laschen (122, 124) erstreckt, sowie eine Druckfeder (118), die sich um das Drahtpolster (120) koaxial zu diesem erstreckt und mit ihren Enden an den starren Laschen (122, 124) angedrückt ist, und einen Stab (126), der sich axial innerhalb des Polsters (120) und der Feder (118) erstreckt und an seinen Enden an den starren Laschen (122, 124) gehalten wird.

13. Vorrichtung nach Anspruch 6, **dadurch gekennzeichnet, dass** die verformbaren Mittel ein Schichtlager (130, 146) aufweisen, das aus einer Stapelung von Lamellen bzw. konischen Metallscheiben (136) oder Elastomerscheiben (151) gebildet ist, wobei dieses Lager zwischen den Enden der Laschen (132, 134, 148, 150) senkrecht zu diesen montiert und über Schrauben (138, 142, 152) an diese Enden befestigt ist.

## Claims

1. A device for feeding fuel to a combustion chamber in a turbomachine, such as an airplane turbojet or turboprop, the device comprising an annular fuel (18) feed rail extending around an outer cylindrical casing (12) of the combustion chamber and connected to fuel feed means, and a plurality of injectors (20) secured to the casing (12) and opening out into the combustion chamber, the injectors (20) being connected to the fuel feed rail (18) by angled fuel transport ducts (22) and by support means (34) for the rail, **characterized in that** the rail support means comprise means (34) that are deformable in bending, twisting, and pivoting, allowing the casing to expand thermally in a radial direction relative to the annular rail (18) and providing a rigid support for the annular rail(18).

2. A device according to claim 1, **characterized in that** the deformable means are connected to the annular rail (18) and to the injectors (20) by rigid tabs extending in a common plane.

3. A device according to claim 2, **characterized in that** the deformable means comprise at least one traction spring (42) mounted between the rigid tabs (43, 44) that are in alignment with each other and that are spaced apart from each other.

4. A device according to claim 3, **characterized in that** the deformable means comprise two traction springs (42) mounted in parallel beside each other between said rigid tabs (43, 44) .

5. A device according to claim 2, **characterized in that** the deformable means comprise two elastically deformable metal rods or blades mounted in parallel between the rigid tabs (43, 44) that are in alignment with each other and that are spaced apart from each other.

6. A device according to claim 1, **characterized in that** the deformable means are connected to the annular rail (18) and to the injectors (20) by rigid tabs extending in parallel planes.

7. A device according to claim 6, **characterized in that** the ends of the rigid tabs are applied against each other and are united by rivets (59, 60) that are mounted with a radial clearance in orifices (58) in the rigid tabs (59, 60) and that have heads (66) forming means for retaining the rigid tabs (59, 60) axially with axial clearance (68).

8. A device according to claim 6, **characterized in that** the deformable means comprise at least one compression spring (70) extending perpendicularly between the rigid tabs (72, 74) and held between them by a coaxial screw (84).

9. A device according to claim 8, **characterized in that** the screw (84) includes a head (86) in the form of a spherical cap guided on a corresponding seat (88) carried by one of the rigid tabs (74).

10. A device according to claim 6, **characterized in that** the deformable means comprise a metal cable wound elastically between the rigid tabs (94, 96), about an axis (92) parallel thereto, and guided in passages through bars (106) secured to the tabs (94, 96).

11. A device according to claim 6, **characterized in that** the deformable means comprise a metal cushion (107, 120) mounted between the ends of the rigid tabs (108, 109, 122, 124), and a holding rod (112, 126) extending inside the cushion (107, 120), perpendicularly to the rigid tabs (108, 109, 122, 124), and mounted in orifices in said tabs.

12. A device according to claim 6, **characterized in that** the deformable means comprise a metal cushion (120) extending between the rigid tabs (122, 124), a compression spring (118) extending around the metal cushion (120), coaxially thereabout, and having it ends bearing against the rigid tabs (122, 124), and a rod (126) extending axially inside the cushion (120) and inside the spring (118), and held at it ends against the rigid tabs (122, 124).

13. A device according to claim 6, **characterized in that** the deformable means comprise a laminated abutment (130, 146) formed by a stack of metal conical washers or blades (136) or of elastomer washers (151), the abutment being mounted between the ends of the tabs (132, 134, 148, 150), perpendicularly thereto, and secured to said ends by screws (138, 142, 152).
